# EUROPEAN PATENT APPLICATION

(11) **EP 4 760 209 A1**
(43) Date of publication of application: **17.06.2026**
(21) Application number: 24861793.8
(22) Date of filing: 14.08.2024
(51) Int. Cl.: G01C 21/20

(54) **POSITIONING METHOD AND RELATED APPARATUS**

(30) Priority: 08.09.2023 CN 202311164689
(71) Applicant: Yinwang Intelligent Technologies Co., Ltd., Shenzhen, Guangdong 518129 (CN)
(72) Inventor: XU, Yaojia, Shenzhen, Guangdong 518129 (CN); SHEN, Yujie, Shenzhen, Guangdong 518129 (CN)
(74) Representative: Gill Jennings & Every LLP
(86) International application number: PCT/CN2024/111987
(87) International publication number: WO 2025/050949

(57) **Abstract**

A positioning method and a related apparatus are provided, and are applied to the field of positioning technologies. The positioning method is applied to an electronic device (100), and includes: obtaining a three-dimensional map of a first traversable space (S301); obtaining a first image (S302); obtaining a first location based on the first image and the three-dimensional map of the first traversable space (S303); and displaying a first interface (S304). In this way, positioning can be performed in real time based on the image obtained by the electronic device (100), and accuracy and real-time performance are high. The solution has a simple operation process, shortens operation time of a positioning process, significantly improves user experience during positioning, and implements instant availability.

## Description

This application claims priority to Chinese Patent Application No. 202311164689.7, filed with the China National Intellectual Property Administration on September 8, 2023 and entitled "POSITIONING METHOD AND RELATED APPARATUS", which is incorporated herein by reference in its entirety.

### TECHNICAL FIELD

This application relates to the field of positioning technologies, and in particular, to a positioning method and a related apparatus.

### BACKGROUND

With the improvement of people's living standards and the increase in vehicle ownership, building structures of various parking lots are increasingly complex. When a user parks a vehicle in a parking lot, how to walk out of the parking lot and how to find the vehicle parked by the user become increasingly difficult. For example, a shopping mall has a three-floor parking lot with a total of more than 8000 parking spaces. Users entering the parking lot of the shopping mall generally face problems of "difficult to find a route" and "difficult to find a vehicle".

Positioning in a parking lot via an electronic device is a key technical point for resolving this problem. However, an overall structure (for example, a plurality of floors and a plurality of parking spaces) of a traversable space for a vehicle is complex, and building elements at different locations are similar. In this way, it is still difficult for a conventional positioning system (for example, GPS or network positioning) to accurately indicate a user's location to the user. Especially in a space like a parking lot located inside a building, because indoor network positioning accuracy is poor, and strength and stability of an indoor network signal are lower, indoor user positioning accuracy is further reduced, and user experience is poor.

### SUMMARY

Embodiments of this application provide a positioning method and a related apparatus, to improve positioning accuracy of a user in a traversable space, and provide good user experience.

According to a first aspect, a positioning method is provided. The method may be performed by an electronic device. The electronic device includes but is not limited to an electronic device like a handheld terminal or a wearable device.

The method includes: obtaining a three-dimensional map of a first traversable space; obtaining a first image; and obtaining, based on the first image and the three-dimensional map of the first traversable space, a first location of the electronic device in the first traversable space.

In the foregoing technical solution, the electronic device may obtain a map of a traversable space, and the map may indicate an image of the traversable space. During positioning, the electronic device may determine, based on the obtained image and the three-dimensional map of the traversable space, a location of the currently obtained image in the three-dimensional space, to obtain the location of the electronic device in the traversable space, so as to implement positioning. In this solution, positioning is performed based on the image obtained by the electronic device, positioning accuracy is high, and a problem of "drift" in positioning is not likely to occur. For example, a user only needs to enable an image sensor, or start an application to automatically invoke the image sensor, to shoot an image to implement positioning. Therefore, an operation procedure in this embodiment of this application is simple, operation time of a positioning process is shortened, user experience during positioning can be significantly improved, and instant availability can be implemented.

In addition, in a positioning process, information that needs to be input in real time includes only a shot image. Therefore, this solution may not be limited by a network connection status, and is applicable to terminal positioning in a plurality of network conditions. Therefore, user experience is good.

Further, the method further includes: displaying a first interface, where the first interface includes a view of the first traversable space and a location of the first location in the view of the first traversable space.

In the foregoing aspect, the first traversable space is used to distinguish between different traversable spaces. The traversable space is a space in which a movable object (including a living object and an inanimate object) can travel. For example, a person or a vehicle may travel, move, or stop in the traversable space. For another example, there is a road and a parking space in the traversable space.

In some possible cases, the traversable space may adopt a semi-enclosed design, for example, the traversable space has an exit and an entrance, and the remaining area is usually enclosed. The traversable space has a wall or even a multi-layer structure.

In some other possible cases, the traversable space is located indoors or inside a building. A network connection is prone to be unstable inside a building. However, in this application, positioning is performed based on a shot image and a map, so that a positioning function can be implemented without a network.

In some other possible cases, the traversable space is located indoors and underground. For example, the traversable space may be an underground garage.

With reference to the first aspect, in some implementations of the first aspect, the three-dimensional map of the first traversable space is obtained by fusing visual information collected by an apparatus that has travelled in the first traversable space. For example, the three-dimensional map of the first traversable space is obtained by fusing visual information collected by a vehicle that has travelled in the first traversable space. The visual information includes but is not limited to information from the image sensor, and information from a vision sensor like a lidar or a millimeter-wave radar. For example, the visual information may include one or more of a pixel image, a point cloud image, and the like.

For example, the first traversable space is an underground garage. A vehicle performs collection and fusion to obtain a self-constructed map in the underground garage via a sensing system (for example, a camera or a radar), and uploads the self-constructed map to a cloud. After a plurality of vehicles upload self-constructed maps of a same underground garage, the cloud may perform fusion on the self-constructed maps uploaded by the plurality of vehicles, to form an accurate three-dimensional map for the underground garage.

In this implementation, the three-dimensional map is also obtained based on visual information, and can better reflect a building feature in a space in a form of an image, so that image matching accuracy can be improved, and positioning accuracy can be further improved.

With reference to the first aspect, in some implementations of the first aspect, the map of the first traversable space may be preconfigured in the electronic device, or may be obtained by the electronic device through a network. Herein, "preconfigured" may be performed before positioning is performed.

For example, an installation package may include one or more three-dimensional maps of one or more traversable spaces (including the three-dimensional map of the first traversable space), and the electronic device may obtain the one or more three-dimensional maps of the one or more traversable spaces by downloading the installation package.

For another example, when approaching an area (for example, a city or an urban area), the electronic device may download, through a network, a three-dimensional map of a traversable space in the city or the urban area. Optionally, the cloud actively pushes the three-dimensional map of the traversable space to the electronic device, or the electronic device actively requests the three-dimensional map of the traversable space from the cloud.

With reference to the first aspect, in some implementations of the first aspect, the method further includes: receiving indication information of the first traversable space from a first vehicle, where the first vehicle is associated with the electronic device, and the first traversable space is a traversable space that the first vehicle enters.

In this implementation, the first vehicle may indicate, to the electronic device, to perform matching with a three-dimensional map of a specific traversable space (or several traversable spaces), so that matching time can be reduced, and a positioning speed and positioning accuracy can be improved.

With reference to the first aspect, in some implementations of the first aspect, the method further includes: obtaining indication information of the first traversable space from the cloud, where the first traversable space is a traversable space in which a first vehicle is located, and the first vehicle is associated with the electronic device.

In this implementation, the electronic device may learn, from the cloud, to perform matching with a three-dimensional map of a specific traversable space (or several traversable spaces), so that matching time can be reduced, and a positioning speed and positioning accuracy can be improved.

With reference to the first aspect, in some implementations of the first aspect, the method further includes: before obtaining the three-dimensional map of the first traversable space, detecting a network environment of the electronic device; and when the network environment in which the electronic device is located is normal, performing the step of "obtaining indication information of the first traversable space from a cloud".

In this implementation, when the network of the electronic device is normal, an identifier of the traversable space in which the vehicle is currently located may be obtained from the cloud, so that matching time can be reduced, and a positioning speed and positioning accuracy can be improved. In addition, a network status is detected before the identifier is obtained, so that a probability of an information obtaining failure can be reduced, and positioning efficiency can be improved.

With reference to the first aspect, in some implementations of the first aspect, obtaining the first location of the electronic device in the first traversable space based on the first image and the three-dimensional map of the first traversable space includes:
performing matching between a spatial element in the first image and a spatial element on the three-dimensional map of the first traversable space, to determine a matched spatial element; and determining the first location of the electronic device in the traversable space based on a location of the matched spatial element on the three-dimensional map of the first traversable space. Further, the method further includes: extracting the spatial element in the first image.

For example, the spatial element may include a building (for example, a wall, a pillar, or a ceiling), a lane line, a parking space line, a parking space number, and a sign (for example, a floor indication, an elevator indication, or an exit indication).

With reference to the first aspect, in some implementations of the first aspect, the method further includes:
determining, based on the first image and the three-dimensional map of the first traversable space, an orientation of the electronic device on the three-dimensional map of the first traversable space.

With reference to the first aspect, in some implementations of the first aspect, the three-dimensional map of the first traversable space includes a plurality of images shot at a plurality of angles of view, and the method further includes:
determining, based on the first image and the three-dimensional map of the first traversable space, a target image that matches the first image; and
determining, based on a first angle of view corresponding to the target image, the orientation of the electronic device on the three-dimensional map of the first traversable space.

With reference to the first aspect, in some implementations of the first aspect, the first interface further includes the orientation of the electronic device in the traversable space.

With reference to the first aspect, in some implementations of the first aspect, the method further includes: determining a destination point, where the destination point is located in the first traversable space; and displaying a second interface, where the second interface includes the view of the first traversable space and a navigation route from the first location to the target point. Precise positioning is implemented based on a shot image, so that the user can be quickly and easily guided to find a destination, thereby improving user experience.

With reference to the first aspect, in some implementations of the first aspect, the method further includes: receiving an operation instruction input by the user, where the operation instruction indicates the destination point.

With reference to the first aspect, in some implementations of the first aspect, the destination point is a parking location of the first vehicle.

According to a second aspect, a positioning method is provided. The method may be performed by a vehicle. The vehicle is a vehicle in a broad sense, and may be a transportation vehicle (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), a mobile robot, or the like. For another example, the robot may be a robot like an automated guided vehicle (Automated Guided Vehicle, AGV), a walkable conversational robot, or a service robot. The electronic device includes but is not limited to an electronic device like a handheld terminal or a wearable device.

The method includes: obtaining a second image; and when the second image matches an image of an entrance of a first traversable space, sending indication information of the first traversable space to an electronic device. The electronic device is associated with a first vehicle, the indication information of the first traversable space is used by the electronic device to perform positioning on a three-dimensional map of the first traversable space, and the three-dimensional map of the first traversable space indicates a three-dimensional image of the first traversable space.

With reference to the second aspect, in some implementations of the second aspect, the method includes: obtaining a location of the first vehicle; and determining an image of an entrance of at least one to-be-matched traversable space based on the location of the first vehicle, where the at least one traversable space includes the first traversable space.

With reference to the second aspect, in some implementations of the second aspect, the method includes: obtaining a vertical height of the entrance of the first traversable space; and detecting an altitude variation of the first vehicle; and when the second image matches the image of the entrance of the first traversable space and an absolute value of a difference between the altitude variation of the vehicle and the vertical height of the entrance of the first traversable space is less than a preset threshold, sending the indication information of the first traversable space to the electronic device.

In other words, sending the indication information of the first traversable space to the electronic device when the second image matches the image of the entrance of the first traversable space includes: When the second image matches the image of the entrance of the first traversable space and the absolute value of the difference between the altitude variation of the vehicle and the vertical height of the entrance of the first traversable space is less than the preset threshold, sending the indication information of the first traversable space to the electronic device.

According to a third aspect, a positioning system is provided. The positioning system includes an electronic device and a vehicle. The electronic device is configured to implement the method described in any one of the first aspect or the possible implementations of the first aspect, and the vehicle is configured to implement the method described in any one of the second aspect or the possible implementations of the second aspect.

According to a fourth aspect, a positioning apparatus is provided. The positioning apparatus includes an obtaining unit, a processing unit, and a display unit. The positioning apparatus is configured to perform the method described in any one of the first aspect or the possible implementations of the first aspect. Optionally, the positioning apparatus may further include an image sensor and/or a display module. The image sensor is configured to shoot an image, and the display module is configured to present an interface, for example, a graphical user interface (Graphical User Interface, GUI, also referred to as a graphical user interface).

According to a fifth aspect, a positioning apparatus is provided. The positioning apparatus includes an obtaining unit, a processing unit, and a communication unit. The positioning apparatus is configured to implement the method described in any one of the second aspect or the possible implementations of the second aspect. Optionally, the positioning apparatus may further include a vision sensor.

According to a sixth aspect, an electronic device is provided. The electronic device includes a memory and a processor, and the memory is configured to store program instructions.

When the processor executes the program instructions in the memory, the electronic device performs the method described in any one of the first aspect or the possible implementations of the first aspect.

According to a seventh aspect, a vehicle is provided. The vehicle includes a memory and a processor, and the memory is configured to store program instructions.

When the processor executes the program instructions in the memory, the electronic device performs the method described in any one of the second aspect or the possible implementations of the second aspect.

According to an eighth aspect, a computer-readable storage medium is provided. The computer-readable storage medium stores program instructions, and the program instructions are used to implement the method described in any one of the first aspect or the possible implementations of the first aspect, or configured to implement the method described in any one of the first aspect or the possible implementations of the first aspect.

According to a ninth aspect, a computer program product is provided. The computer program product includes instructions or a computer program. When the instructions or the computer program is executed, the method according to any one of the first aspect or the method according to any one of the second aspect is implemented.

### BRIEF DESCRIPTION OF DRAWINGS

The following briefly describes accompanying drawings used in describing embodiments.
FIG. 1 is a diagram of a hardware structure of an electronic device;
FIG. 2 is a diagram of a software structure of an electronic device;
FIG. 3 is a schematic flowchart of a positioning method according to an embodiment of this application;
FIG. 4 is a diagram of a map according to an embodiment of this application;
FIG. 5 is a diagram of an interface of a user interface according to an embodiment of this application;
FIG. 6 is a diagram of another user interface according to an embodiment of this application;
FIG. 7 is a diagram of still another user interface according to an embodiment of this application;
FIG. 8 is a diagram of a first image according to an embodiment of this application;
FIG. 9 is a diagram of a spatial element according to an embodiment of this application;
FIG. 10 is a diagram of an interface of a first interface according to an embodiment of this application;
FIG. 11 is a diagram of an interface of a second interface according to an embodiment of this application;
FIG. 12 is a diagram of information exchange according to an embodiment of this application;
FIG. 13 is a schematic flowchart of another positioning method according to an embodiment of this application;
FIG. 14 is a diagram of a scenario in which a vehicle enters an underground garage according to an embodiment of this application;
FIG. 15 is a diagram of a structure of a positioning apparatus according to an embodiment of this application; and
FIG. 16 is a diagram of a structure of another positioning apparatus according to an embodiment of this application.

### DESCRIPTION OF EMBODIMENTS

The following describes embodiments of this application in detail with reference to accompanying drawings.

An electronic device may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. The electronic device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, an electronic device in a 5G network, an electronic device in an evolved public land mobile communication network (public land mobile network, PLMN), or the like.

A traversable space mentioned in embodiments of this application is a space in which a movable object (including a living object and an inanimate object) can travel. For example, a person or a vehicle may travel, move, or stop in the traversable space. In some solutions, the traversable space includes a road and a parking space, for example, a parking lot. In some possible cases, the traversable space may adopt a semi-enclosed design, for example, the traversable space has an exit and an entrance, and the remaining area is usually enclosed. For example, the traversable space includes a wall or even a multi-floor structure. In some other possible cases, the traversable space is located indoors, or inside a building, for example, an indoor parking lot. In some other possible cases, the traversable space is located indoors and underground. For example, the traversable space may be an underground garage.

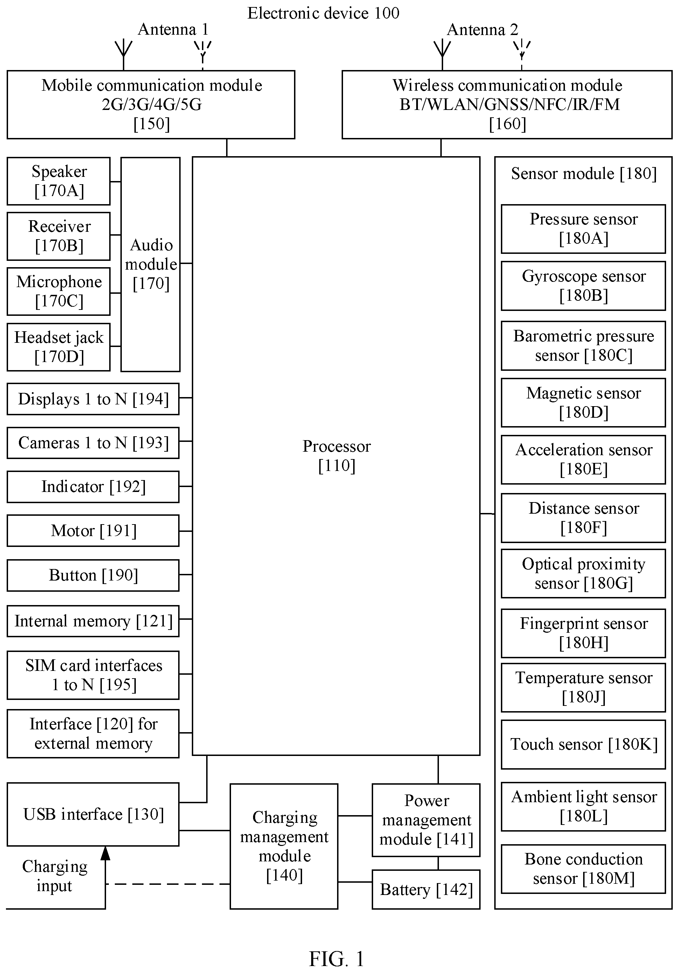

The following first describes an electronic device applicable to this application with reference to FIG. 1.

For example, the electronic device 100 may include a processor 110, an interface (for example, an interface 120 for external memory), a camera 193, and a display 194. Further, the electronic device may further include one or more of the following modules: an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules shown in this embodiment of the present disclosure is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The power management module 141 is configured to supply power to one or more modules via the battery 142 and/or the charging management module 140. A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G/3G/4G/5G or the like.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like. The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The electronic device 100 may implement an audio function, for example, music playing and recording, through the audio module 170, the speaker 170A, the receiver 170B, the microphone 170C, the headset jack 170D, the application processor, and the like.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The pressure sensor 180A is configured to sense a pressure signal, and can convert the pressure signal into an electrical signal. In some embodiments, the pressure sensor 180A may be disposed on the display 194. The barometric pressure sensor 180C is configured to measure barometric pressure. In some embodiments, the electronic device 100 calculates an altitude through the barometric pressure measured by the barometric pressure sensor 180C, to assist in positioning and navigation.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during shooting. The ambient light sensor 180L may also cooperate with the optical proximity sensor 180G to detect whether the electronic device 100 is in a pocket, to avoid an accidental touch.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

For related modules such as the magnetic sensor 180D, the fingerprint sensor 180H, the temperature sensor 180J, the bone conduction sensor 180M, the button 190, the motor 191, the indicator 192, and the SIM card interface 195, refer to descriptions in a related technology.

The foregoing is a diagram of a hardware architecture of the electronic device. The following continues to describe a software architecture of the electronic device by using the electronic device 100 as an example.

A software system of the electronic device 100 may use a layered architecture, an event-driven architecture, a microkernel architecture, a microservice architecture, or a cloud architecture. In this embodiment of the present invention, an Android system of a layered architecture is used as an example to illustrate the software structure of the electronic device 100.

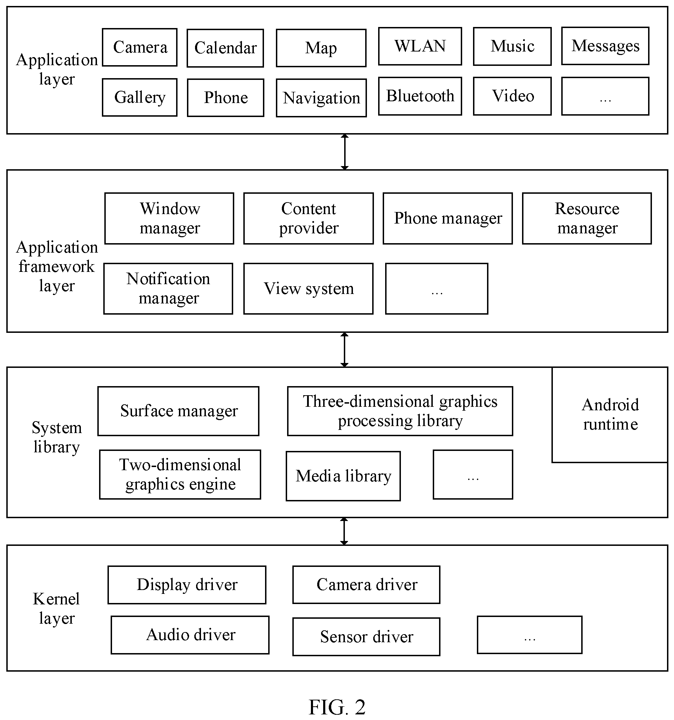

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions. As shown in FIG. 2, the application framework layer may include a window manager, a content provider, a view system, a phone manager, a resource manager, a notification manager, and the like. The window manager is configured to manage a window program. The window manager may obtain a size of the display, determine whether there is a status bar, perform screen locking, take a screenshot, and the like. The content provider is configured to: store and obtain data, and enable the data to be accessed by an application program. The data may include a video, an image, audio, calls that are made and answered, a browsing history and bookmarks, an address book, and the like. The view system includes visual controls such as a control for displaying a text and a control for displaying an image. The view system may be configured to construct an application program. A display interface may include one or more views. For example, a display interface including a Messages notification icon may include a text display view and an image display view. The phone manager is configured to provide a communication function for the electronic device 100, for example, management of a call status (including answering, declining, or the like). The resource manager provides various resources such as a localized character string, an icon, an image, a layout file, and a video file for an application. The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a core library and a virtual machine. The Android runtime is responsible for scheduling and management of the Android system. The core library includes two parts: a function that needs to be called in Java language and a core library of Android. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL). The surface manager is configured to manage a display subsystem and provide fusion of 2D and 3D layers for a plurality of applications. The media library supports playback and recording in a plurality of commonly used audio and video formats, and static image files. The media library may support a plurality of audio and video coding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing. The kernel layer is a layer between hardware and software. The kernel layer includes at least a display driver, a camera driver, an audio driver, and a sensor driver.

The following describes an example of a working process of software and hardware of the electronic device 100 with reference to a shooting scenario. When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

The positioning method provided in embodiments of this application is described in detail below with reference to FIG. 2 to FIG. 14.

With the demand of urbanization development, increasingly more high buildings make people have an increasingly strong demand for precise positioning in a space. Embodiments of this application provide a positioning method and a related apparatus, to improve positioning accuracy and positioning efficiency of a user in a traversable space, and improve user experience.

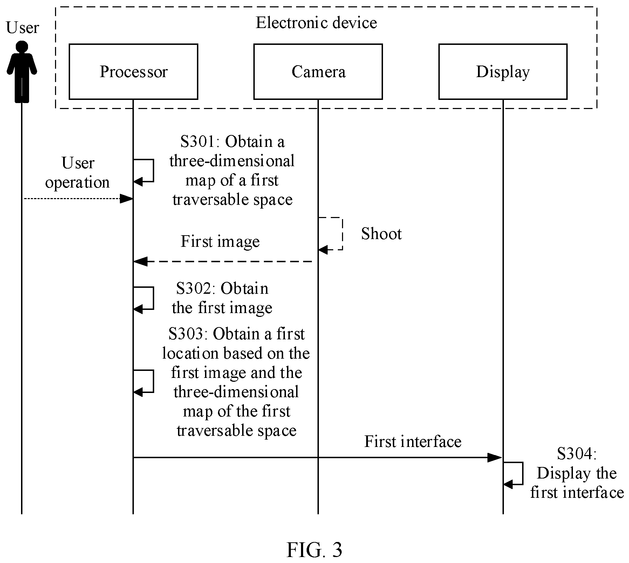

FIG. 3 is a schematic flowchart of a positioning method according to an embodiment of this application. Optionally, the method may be applied to the electronic device 100 in FIG. 1. It should be understood that, for ease of description, a sequence of S301 to S304 is used for description herein, but this is not intended to constitute a limitation that the method is necessarily performed in the foregoing sequence. An execution sequence, execution time, a quantity of executions, and the like of the foregoing one or more steps are not limited in embodiments of this application. Step S301 to step S304 are specifically as follows:
Step S301: An electronic device obtains a three-dimensional map of a first traversable space.

The first traversable space may accommodate movement of a movable object, for example, a parking lot, a parking building, or an underground garage. The three-dimensional map of the first traversable space indicates a three-dimensional image of the first traversable space. For example, the three-dimensional map may indicate three-dimensional coordinate locations of some or all spatial elements in the first traversable space in the space. The spatial element may include a building (for example, a wall, a support column, a ceiling, or a pipe), a lane line, a driving direction arrow, a color block, a speed bump, a parking space line, a parking space number, and a sign (for example, a floor indication, an elevator indication, or an exit indication). Further, the three-dimensional map may further indicate attribute information of the spatial element. The attribute information is, for example, one or more of a location, a color, a pattern, and a size. It should be understood that the three-dimensional map may be stored or transmitted in a plurality of forms. For example, the three-dimensional map is directly stored by using a three-dimensional model, or the attribute information of the spatial element may be stored and then represented in a plane view based on a perspective relationship. In other words, three dimensions herein mean that a feature of a spatial element in a three-dimensional world can be represented, and do not mean that the map is necessarily stored in a form of three-dimensional data. For example, in some solutions, a three-dimensional feature of a spatial element may also be represented by using a map, and even a height, a depth, and the like of the spatial element can be represented through translation, rotation, and angle of view conversion. Such a map also falls within a range of a three-dimensional map.

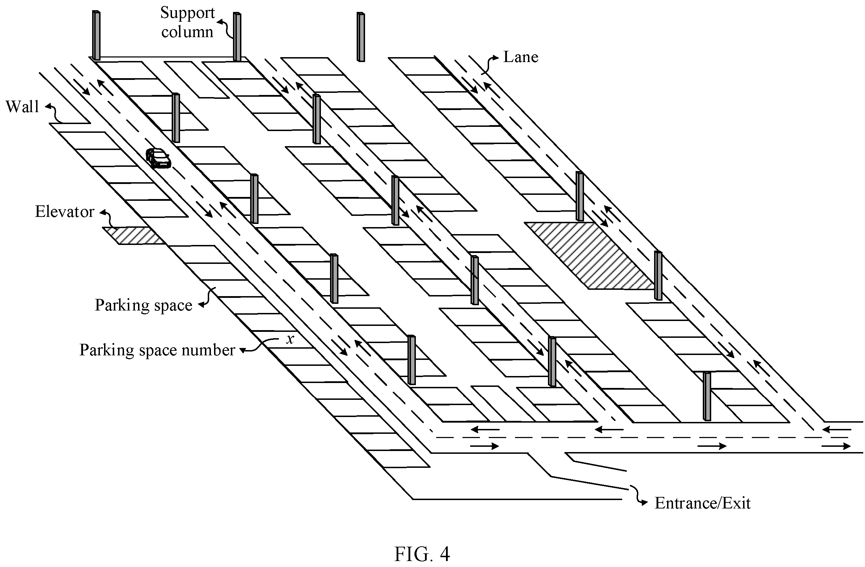

FIG. 4 is a diagram of a map according to an embodiment of this application. The map may include spatial elements such as a wall, a support column, a parking space, an underground garage zone, a parking space number, an elevator entrance, a lane, a lane line, a sign, or an entrance/exit. The three-dimensional map shown in FIG. 4 may reflect locations of the spatial elements in a three-dimensional space, and may further include one or more of the locations of the spatial elements and colors, patterns, and the like of the spatial elements. Further, the three-dimensional map may further reflect sizes of the foregoing elements in three dimensions, and the like.

In some possible solutions, the three-dimensional map of the first traversable space is obtained by fusing visual information collected by an apparatus that has travelled in the first traversable space. For example, the three-dimensional map of the first traversable space is obtained by fusing visual information collected by a vehicle that has travelled in the first traversable space. The visual information includes but is not limited to information from an image sensor, and information from a vision sensor like a lidar or a millimeter-wave radar. For example, the visual information may include one or more of a pixel image, a point cloud image, a fused image (for example, a self-constructed map in the following). For example, the first traversable space is an underground garage. A vehicle performs collection and fusion to obtain a self-constructed map in the underground garage via a sensing system (for example, a camera or a radar), and uploads the self-constructed map to a cloud. After a plurality of vehicles upload self-constructed maps of a same underground garage, the cloud may perform fusion on the self-constructed maps uploaded by the plurality of vehicles, to form an accurate three-dimensional map for the underground garage. In other words, the three-dimensional map may be obtained based on visual information collected by crowd-sourced vehicles.

It should be understood that the first traversable space may belong to one or more of a plurality of traversable spaces. For ease of understanding, the following describes several manners of obtaining the three-dimensional map of the first traversable space by using examples.

Manner 1: The three-dimensional map of the first traversable space is preconfigured in the electronic device. For example, an installation package may include one or more three-dimensional maps of one or more traversable spaces (including the three-dimensional map of the first traversable space), and the electronic device may obtain the one or more three-dimensional maps of the one or more traversable spaces by downloading the installation package.

Optionally, all the three-dimensional maps included in the installation package may be considered as the three-dimensional map of the first traversable space. Alternatively, the three-dimensional map of the first traversable space is determined based on other input information.

Manner 2: The electronic device may obtain the three-dimensional map of the first traversable space through a network. For example, when approaching an area (for example, a city or an urban area), the electronic device may download, through a network, a three-dimensional map of a traversable space in the city or the urban area. Optionally, the cloud may actively send the three-dimensional map of the traversable space to the electronic device, or optionally, the electronic device actively requests the three-dimensional map of the traversable space from the cloud.

Manner 3: The electronic device may determine, based on indication information of the first traversable space, the three-dimensional map of the first traversable space from a three-dimensional map of at least one traversable space. The indication information may be one or more of a name, an ID, a location (for example, one or more of a longitude, a latitude, or an altitude), an ID of a map tile, geo-fence information, and the like.

Optionally, the indication information of the first traversable space may be determined by the electronic device based on location information of the electronic device, or input by a user, or sent by another device. The following describes several possible solutions.

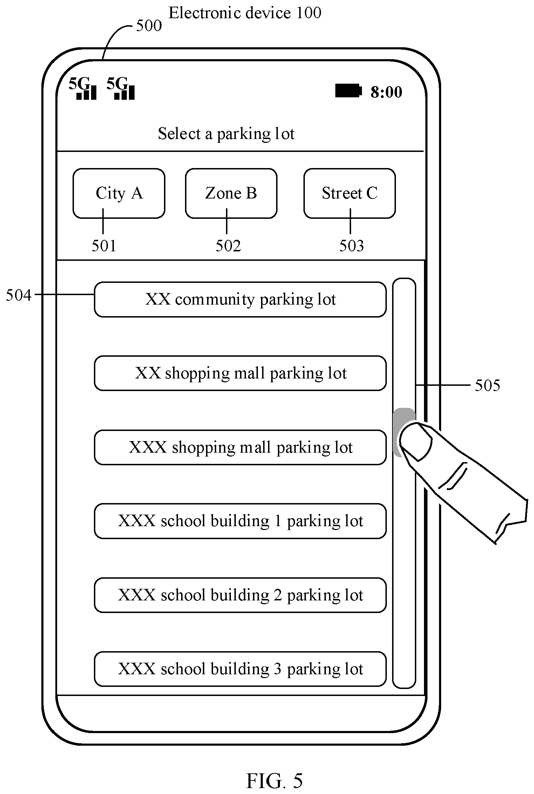

In some examples, the electronic device 100 may display indication cards (or referred to as spaces) of a plurality of traversable spaces, and the electronic device 100 may determine, in response to a user operation (for example, a tap operation) on any one of the plurality of indication cards, that a traversable space corresponding to the indication card is the first traversable space. For details, refer to a user interface 500 shown in FIG. 5. As shown in FIG. 5, the user interface 500 may include a title "Select a parking lot", a control 501, a control 502, a control 503, an indication card 504 (that is, indicating an interface of a traversable space), and a control 505. The control 501 to the control 503 are used to filter indication cards displayed this time. For example, the control 501 is used to select or enter a city in which a parking lot is located, the control 502 is used to select or enter a district (or county) in which the parking lot is located, the control 502 is used to select or enter a street (or another region granularity) in which the parking lot is located, and the control 505 is used to slide a card list, to trigger an update of displayed indication cards. It should be understood that there may be more or fewer (or even no) controls. In some examples, in response to a user operation (for example, a tap operation) on the indication card 504, the electronic device 100 may generate, based on the indication card 504, a selection operation for a "XX community parking lot", to obtain a three-dimensional map of the "XX community parking lot".

In some other examples, the electronic device 100 may receive the indication information that is of the first traversable space and that is sent by a vehicle (referred to as a first vehicle for ease of differentiation). For example, the first vehicle enters the "XX community parking lot", and an ID is P011. In this case, the first vehicle may send indication information of the "XX community parking lot" to the electronic device 100, for example, send the ID "P011" of the traversable space to the electronic device. In this example, the electronic device 100 may be associated with one or more vehicles. For example, an application is installed on the electronic device 100, account information is established in the application, and the account information is associated with a vehicle. For another example, the electronic device 100 is an electronic device used by a vehicle owner. It should be understood that the vehicle owner in this embodiment of this application is an authorized user of the vehicle.

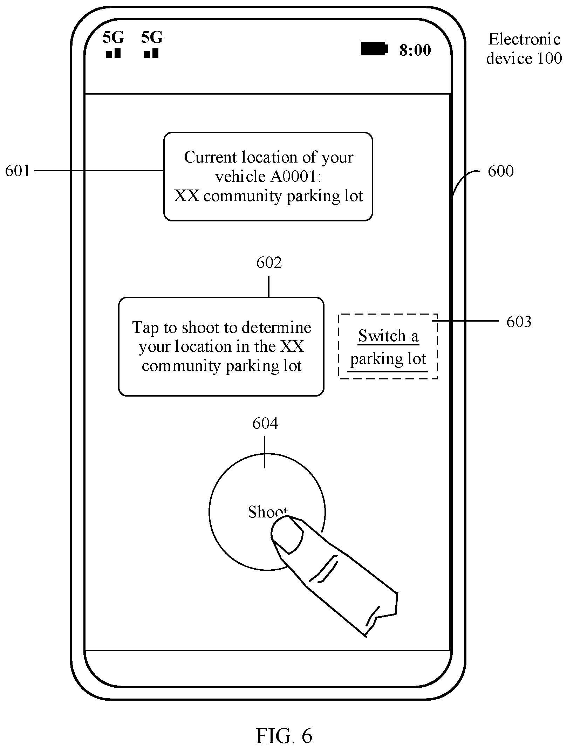

FIG. 6 is a diagram of a possible user interface according to an embodiment of this application. A user interface 600 may include a control 601, a control 602, a control 603, and a control 604. The control 601 is used to display the first traversable space (namely, the "XX community parking lot") in which the first vehicle is located, the control 602 is used to prompt the user to trigger positioning, the control 603 is used to trigger selection of another parking lot, and the control 604 is used to trigger entering of a shooting procedure.

In some other examples, the electronic device 100 may receive the indication information that is of the first traversable space and that is sent by the cloud. For example, the electronic device 100 requests a location of the electronic device 100 from the cloud, and the cloud sends, to the electronic device 100, indication information of a traversable space closest to the location of the electronic device 100. For another example, the vehicle may send a location of the vehicle or indication information of a traversable space in which the vehicle is located to the cloud, and the cloud may send the indication information of the first traversable space to the electronic device 100. The first traversable space is a traversable space (or a traversable space in which the first vehicle is located) currently closest to the first vehicle.

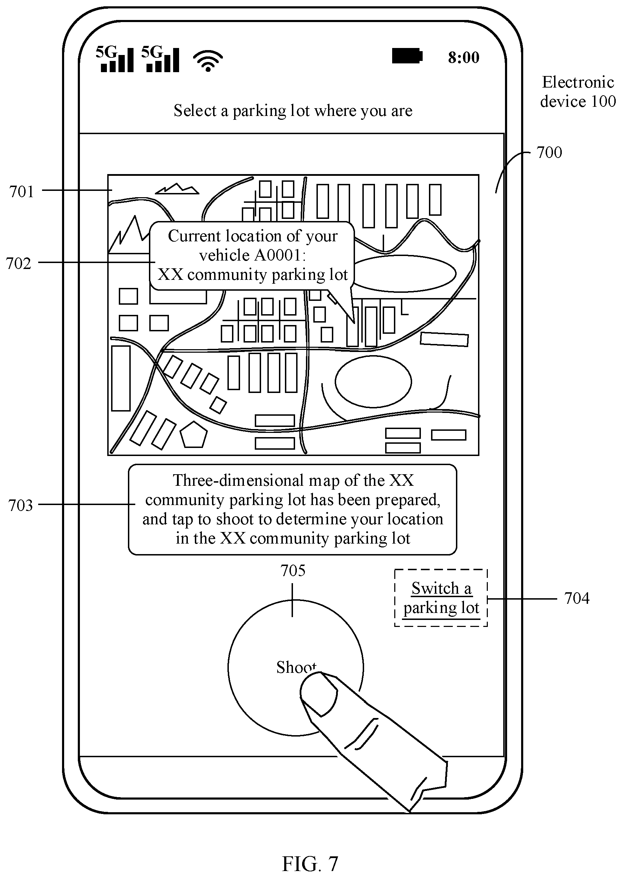

FIG. 7 is a diagram of still another user interface according to an embodiment of this application. A user interface 700 may include a title "Select a parking lot where you are", a control 701, a control 702, a control 703, a control 704, and a control 705. The control 701 is used to display a map of the first traversable space (namely, the "XX community parking lot") in which the first vehicle associated with the electronic device 100 is located and a surrounding area. A location and a map of the first traversable space in which the first vehicle is located may be provided by the cloud for the electronic device 100. The control 702 is used to display a specific location of the first vehicle on the map, the control 703 is used to prompt the user to trigger positioning, the control 704 is used to trigger selection of another parking lot, and the control 705 is used to trigger entering of a shooting procedure.

In a possible implementation, the electronic device may detect a network environment of the electronic device, and when the network environment in which the electronic device is located is normal, obtain the indication information of the first traversable space from the cloud. Specifically, that the network environment of the electronic device is normal may include the following cases: Information is successfully sent or received, or a data transmission rate (or replaced with an upload rate or a download rate) is greater than a preset first network rate threshold, or the like.

It should be understood that the foregoing plurality of manners may be combined. A combination of Manner 1 and Manner 3 is used as an example. Three-dimensional maps of a plurality of traversable spaces are preconfigured in the electronic device, and one of the three-dimensional maps of the traversable spaces is determined by receiving the indication information from the vehicle. A combination of Manner 1 and Manner 2 is used as an example. The electronic device may preconfigure three-dimensional maps of a plurality of traversable spaces. The three-dimensional maps are maintained by the cloud. When a three-dimensional map of a traversable space (or a group of traversable spaces) is updated, the cloud may provide updated information for the electronic device, to update the three-dimensional maps in the electronic device, so as to obtain an updated three-dimensional map or updated three-dimensional maps of the one or more traversable spaces. A combination of Manner 1 and Manner 2 is used as an example. A three-dimensional map of a part of traversable spaces may be preset in an APP, and the electronic device obtains the three-dimensional map of the part of the traversable spaces by installing and downloading the APP. Further, in a subsequent use process, the user may selectively download a map of a specified area based on a requirement of the user. In addition, when the map on the cloud is updated, the map is also pushed to the electronic device, and the user may select, based on a requirement of the user, whether to update the three-dimensional map.

In some possible implementations, desensitization process may be performed on the map of the traversable space, to avoid privacy and information security problems. Optionally, the map may be stored in the electronic device for a long time.

Step S302: The electronic device obtains a first image.

The obtaining may include obtaining from a sensor, or reading from stored image data (for example, obtaining from an album). Optionally, the first image may include one or more images, or may further include video data. For example, when the electronic device shoots an image via a camera, the electronic device may obtain a video stream shot by the camera, and capture one or more frames of images from the video stream as the first image.

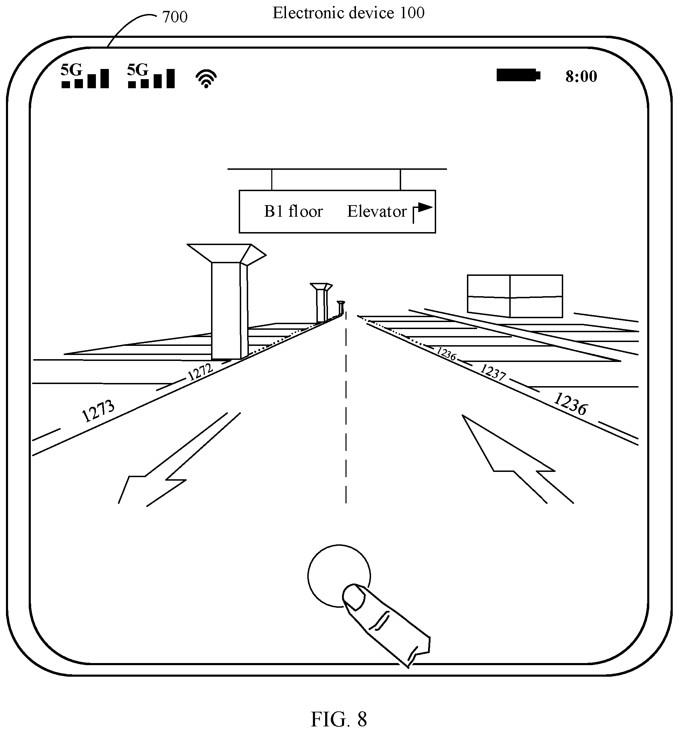

For example, the electronic device may include a camera, and the electronic device may invoke the camera to shoot an image, to obtain the image from the camera. FIG. 8 is a diagram of a first image according to an embodiment of this application.

In some solutions, step S302 is performed after an operation of the user is received. For example, the method shown in FIG. 3 may be integrated into an application (application, APP) as a function, and step S302 is performed after the user starts the application. For another example, with reference to FIG. 6, the electronic device may shoot the first image in response to tapping the control 604 or touching and holding the control 604 by the user. Certainly, the operation of entering the shooting procedure by the user is not limited to the several operations shown herein. For example, the user may alternatively enter the shooting procedure by pressing a volume button or the like.

Further, the electronic device may first obtain camera usage permission (for example, shooting or video recording permission), and then shoot an image via the camera. In a possible implementation, when enabling a positioning function (for example, starting a positioning application), the electronic device may display prompt information, to prompt the user to authorize the function or the positioning application to use the camera. In another case, the user may authorize, through a system setting function of the electronic device, the positioning function (for example, when the positioning application is started) to use the camera.

Step S303: The electronic device obtains a first location of the electronic device based on the first image and the three-dimensional map of the first traversable space.

The first location is in the first traversable space. Specifically, the electronic device determines, based on the first image and the three-dimensional map of the traversable space, a location of a currently obtained image in the three-dimensional space, to obtain a location of the electronic device in the traversable space. The first image obtained by the electronic device may be shot at any location in the first traversable space. In other words, for an image shot by the user at any location on the map, the electronic device may perform matching between the image with the map, and obtain a corresponding location of the electronic device on the map when the matching succeeds. Therefore, the user can accurately and timely position the user, even without support of a network. This significantly improves use convenience.

In a possible implementation, the three-dimensional map of the first traversable space is obtained by fusing a plurality of images, and each of the plurality of images may be associated with one coordinate location or a group of coordinate locations. During matching, the electronic device may determine, from the plurality of images, a target image that matches the first image. A location associated with the target image may be used as the first location of the electronic device, or the location associated with the target image is related to the first location of the electronic device. Further, during matching, the electronic device may perform matching between a spatial element in the first image and spatial elements in a plurality of images to obtain a matched spatial element, so as to determine, based on the matched spatial element, the target image that matches the first image.

As mentioned above, the three-dimensional map of the first traversable space may be obtained by fusing images shot by the vehicle in the first traversable space. In some solutions, when shooting an image, the vehicle may associate a currently shot image with a current location of the vehicle. Correspondingly, when the shot image is used to obtain the three-dimensional map of the first traversable space through fusion, an image that is of the image and that is included in the three-dimensional map also corresponds to a location. In this way, when the electronic device implements positioning based on the shot first image, the electronic device may perform matching in the three-dimensional map for an image similar to the first image, to deduce a current location of the electronic device based on a location corresponding to the matched image.

In a possible implementation, the electronic device may perform matching between the spatial element in the first image and the spatial element on the three-dimensional map of the first traversable space, to determine the matched spatial element, and determine the first location of the electronic device in the traversable space based on a location of the matched spatial element (for example, vector coordinates of the matched spatial element) in the three-dimensional map of the first traversable space. The matched spatial element is a spatial element that is in the spatial elements of the first image and that can match the spatial element on the three-dimensional map. For example, a matching degree is greater than a first threshold. The first threshold herein may be predefined or preset.

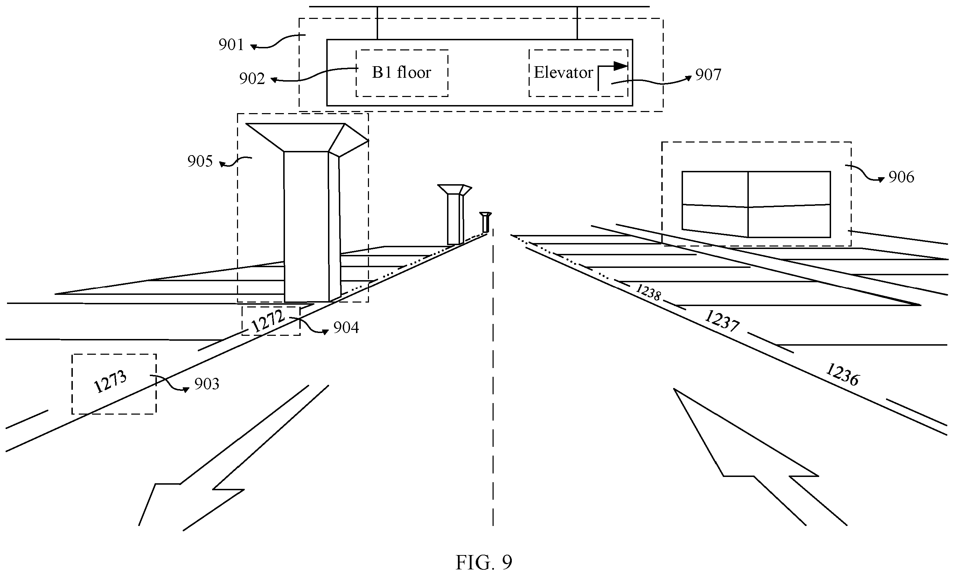

FIG. 9 is a diagram of a spatial element according to an embodiment of this application. The electronic device may extract a plurality of spatial elements from the image shown in FIG. 9, for example, a sign 901, text (or a floor indicator) 902, a parking space number (that is, 1273) 903, a parking space number (that is, 1272) 904, a support column 905, a wall 906, and text (or a guidance symbol) 907. The electronic device 100 may perform matching between the one or more elements and the spatial element on the three-dimensional map of the first traversable space. Matching of a parking space number is used as an example. The parking space number (that is, 1273) 903 may match a parking space number "1273" in the first traversable space (that is, the parking space number "1273" is a matched spatial element). Similarly, when the sign 901 can match a sign in the three-dimensional map, the sign 901 is considered as a matched spatial element. The first location of the electronic device may be determined based on a location of the matched spatial element (for example, the parking space number "1273") in the three-dimensional map.

In some solutions, the electronic device may further determine an orientation of the electronic device based on the first image and the three-dimensional map of the first traversable space. The orientation herein is a relative orientation of a preset direction of the electronic device in the three-dimensional map in the traversable space. For example, the preset direction of the electronic device is represented by a direction of the back of the electronic device when the electronic device is upright. For another example, the preset direction may be a rotation axis direction of a gyroscope.

For ease of understanding, the following lists several possible manners of determining the orientation.

Manner 1: The electronic device may determine the orientation of the electronic device based on an angle of view corresponding to the first image. For example, the three-dimensional map includes a plurality of images shot at a plurality of angles of view. During matching, the electronic device determines the target image that matches the first image. The target image is an image of the three-dimensional map at a first angle of view. The orientation of the electronic device is an orientation of the first angle of view, or the orientation of the electronic device is related to the orientation of the first angle of view. For example, when the electronic device uses a rear-facing camera to shoot an image, the orientation of the electronic device is the orientation of the first angle of view.

As mentioned above, the three-dimensional map may be obtained by fusing images shot at a plurality of locations. When the vehicle passes through a location in the first traversable space, an image may be shot at the first angle of view. The location and the image shot at the angle of view are used for fusion to obtain the three-dimensional map, to form an image in the three-dimensional map. During positioning, after shooting the first image, the electronic device performs matching between the first image and the images in the three-dimensional map, and may determine, based on a shooting angle of view (namely, the first angle of view) corresponding to an image that matches the first image, a shooting angle of view at which the electronic device shoots the first image, to determine the orientation of the electronic device. In other words, because the electronic device may be located at a location and an orientation in which the vehicle collects the image, the electronic device can shoot the first image that matches the image. The location and the orientation of the electronic device may be the same as the location and the orientation of the vehicle that collects the image.

Further, when matching for the image is performed based on the first image, the spatial element in the first image may be extracted, so that matching is performed between the spatial element in the first image and spatial elements in the images in the three-dimensional map, to determine an image that is of the three-dimensional map and that matches the first image. For example, with reference to FIG. 9, the first image obtained by the electronic device includes an image of the sign 901, and a target image matching the image is determined based on the image of the sign 901. The target image is an image of the sign 901 of the three-dimensional map at the first angle of view. The orientation of the electronic device is the orientation of the first angle of view, or the orientation of the electronic device is related to the orientation of the first angle of view.

Manner 2: The electronic device may determine the orientation of the electronic device based on a corresponding location of the matched spatial element on the three-dimensional map. For example, with reference to FIG. 9, when the sign 901, the text 902, the parking space number 903, the parking space number 904, the support column 905, the wall 906, the text 907, and the like are matched in the first image, locations of the spatial elements in the map are known. Therefore, a shooting angle of view of the first image may be determined based on the locations of the matched spatial elements in the first image in the three-dimensional map. The orientation of the electronic device is the shooting angle of view of the first image, or the orientation of the electronic device is related to the shooting angle of view.

Manner 3: The electronic device may determine the orientation of the electronic device based on a status of the matched spatial element. Specifically, the electronic device determines, based on the location of the matched spatial element in the first traversable space and the status of the matched spatial element in the first image, the orientation of the electronic device in the traversable space. Specifically, with reference to FIG. 9, the three-dimensional map includes a location of the sign 901, and the electronic device determines, based on a variation in six degrees of freedom (or three degrees of freedom) between the matched sign in the first image and the sign 901 in the three-dimensional map, the orientation of the electronic device. The three degrees of freedom are degrees of freedom of movement along three rectangular coordinate axes x, y, and z, and the six degrees of freedom are degrees of freedom of movement along the three rectangular coordinate axes x, y, and z and degrees of freedom of rotation around the three coordinate axes. Directions of the coordinate axes may be predefined, for example, with reference to a geodetic coordinate system.

In some possible implementations, the image obtained by the electronic device or the vehicle is mainly used to participate in a calculation process (for example, the foregoing matching process). After the calculation is implemented, the image may be deleted, so that storage pressure can be reduced and data security can be improved.

Step S304: The electronic device displays a first interface.

The first interface includes a view of the first traversable space and a location of the first location in the view of the first traversable space. The view of the first traversable space is a view obtained by viewing the three-dimensional map of the first traversable space at any angle, for example, a top view or a plan view of a floor. Further, the view may be rotated, zoomed in, zoomed out, or the like based on the original view based on an operation of the user, to form a new view, or the like.

In some specific implementations, with reference to FIG. 1, the processor 110 of the electronic device 100 may output the first interface, and the display 194 of the electronic device may display the first interface.

Optionally, the first interface further includes the orientation of the electronic device.

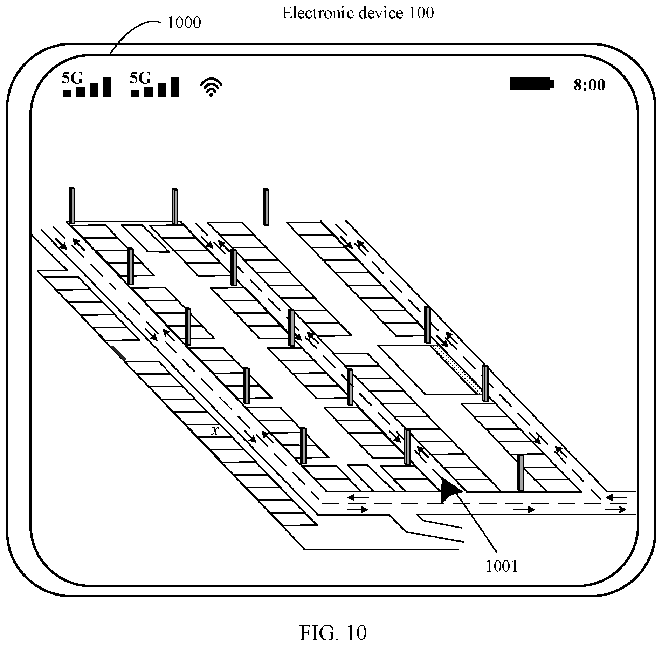

FIG. 10 is a diagram of an interface of a first interface according to an embodiment of this application. The first interface 1000 includes a control 1001, and the control 1001 is used to indicate the location and the orientation of the electronic device. In addition, the view of the first traversable space is further displayed in the first interface. A location of the first location in the view of the first traversable space may be represented through a relative location relationship between the view of the first traversable space and the control 1001.

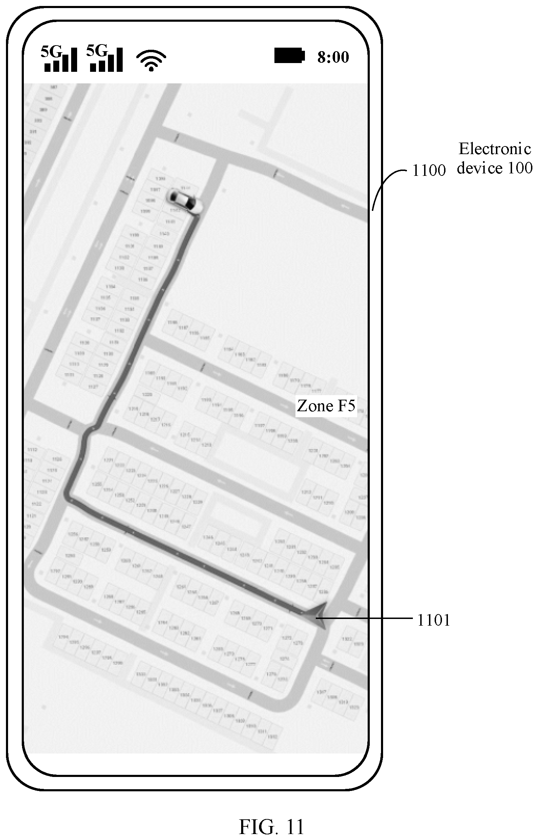

In some possible implementations, the electronic device may determine a destination point and display a second interface. The second interface includes the view of the first traversable space and a navigation route from the first location to the target point. Optionally, the destination point may be determined by receiving an input of the user. For example, the user selects an elevator entrance in the first interface as the destination point. Alternatively, optionally, the destination point may be a location of the vehicle of the user. For example, the destination point is a parking location of the first vehicle. FIG. 11 is a diagram of an interface of a second interface according to an embodiment of this application. The second interface 1100 includes a map of an underground garage, the location of the vehicle, the first location, and a route from the first location to the location of the vehicle. The control 1101 is used to indicate the location (namely, the first location) and the orientation of the electronic device.

In some possible implementations, the electronic device 100 includes a gyroscope sensor 180B. Angular velocities of the electronic device 100 around three axes (for example, axes x, y, and z) may be determined via the gyroscope sensor 180B, to calculate a moving direction and a moving distance of the electronic device 100, so as to implement continuous navigation from the current location to the destination point.

In the embodiment shown in FIG. 3, the electronic device may obtain the map of the traversable space. During positioning, the electronic device may determine, based on the obtained image and the map of the traversable space, a location of the currently obtained image in the traversable space, to obtain a location of the electronic device in the traversable space, so as to implement positioning. In this solution, positioning is performed based on the shot image, and comparison may be performed in real time based on the image obtained by the electronic device. Therefore, accuracy is high. For example, the user only needs to enable the image sensor, or start the application to automatically invoke the sensor, to shoot an image to implement positioning. An operation procedure is simple, operation time in a positioning process is shortened, user experience during positioning can be significantly improved, and instant availability can be implemented.

In addition, in a positioning process, information that needs to be input in real time includes only a shot image. Therefore, this solution may not be limited by a network connection status, and is applicable to terminal positioning in a plurality of network conditions. Therefore, user experience is good.

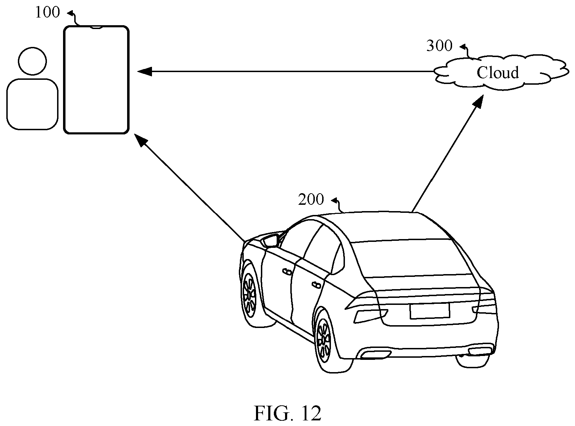

In some of the foregoing solutions, the electronic device may interact with another device. FIG. 12 is a diagram of information exchange according to an embodiment of this application. For descriptions of the electronic device 100, refer to the foregoing descriptions. A vehicle 200 is used as an example of an apparatus having a traveling capability. In specific implementation, the vehicle 200 may alternatively be replaced with another movable terminal, for example, an automated guided vehicle. A cloud 300 is a device that is located at a remote end and that has a centralized computing capability, and may be implemented via a server, a virtual machine, a cloud, or the like. As shown in FIG. 12, the electronic device 100, the vehicle 200, and the cloud 300 may communicate with each other. It should be noted that a direction of an arrow shown in FIG. 3 is merely an example of an information exchange direction, and a unidirectional arrow is merely used as an example to describe a possible flow direction of information, and a communication direction is not necessarily unidirectional.

For example, the electronic device 100 communicates with the vehicle 200. The vehicle may provide information about the vehicle to the electronic device 100, for example, location information and information about a traversable space in which the vehicle is located. The location information includes a longitude, a latitude, and an address (for example, a street or a building). The information about the traversable space is, for example, an identifier (a number or an ID) of the traversable space, and information about an entrance of the traversable space (for example, a number, an identifier, or an image of the entrance).

Communication between the electronic device 100 and the cloud 300 is used as an example. The cloud may provide the electronic device 100 with the information about the vehicle, the information about the traversable space, or the like. The information about the vehicle is, for example, a current location of the vehicle and information about a traversable space in which the vehicle is currently located. The information about the traversable space is, for example, a three-dimensional map of the traversable space.

Communication between the electronic device 100, the vehicle 200, and the cloud 300 is used as an example. The vehicle may provide the information about the vehicle to the cloud 300, for example, the location information and the information about the traversable space in which the vehicle is located, and the cloud further provides information to the electronic device 100.

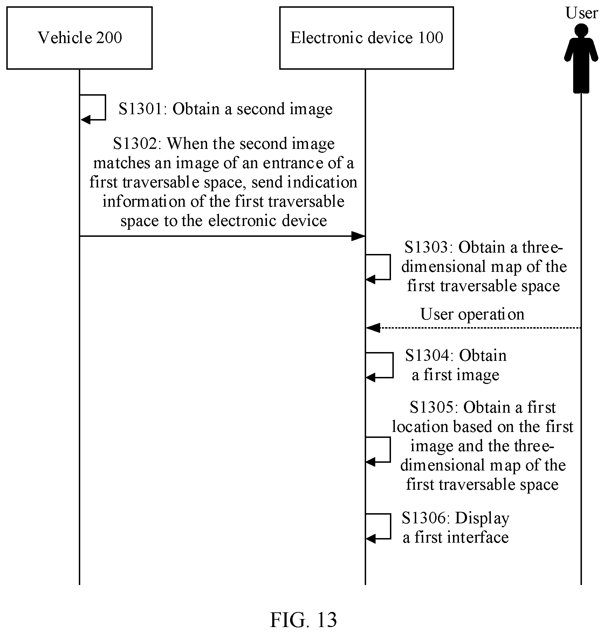

The following describes an example of another positioning method provided in an embodiment of this application with reference to FIG. 13. Optionally, the method may be applied to the electronic device 100 and the vehicle 200 in FIG. 12. It should be understood that, for ease of description, a sequence of S1301 to S1306 is used for description herein, but this is not intended to constitute a limitation that the method is necessarily performed in the foregoing sequence. An execution sequence, execution time, a quantity of executions, and the like of the foregoing one or more steps are not limited in embodiments of this application. Step S1301 to step S1306 are specifically as follows:
Step S1301: A vehicle obtains a second image.

For example, the vehicle 200 (considered as a first vehicle) may include a vision sensor, for example, a camera, a radar, or a lidar. The vehicle 200 may shoot an image via the vision sensor. Optionally, the second image may include one (or one frame of) image or a plurality of (or a plurality of frames of) images, or may further include video data.

Step S1302: When the second image matches an image of an entrance of a first traversable space, the vehicle sends indication information of the first traversable space to the electronic device.

Specifically, the traversable space may include the entrance, and an image of the entrance may be preset in the first vehicle or obtained by the first vehicle through a network. The first vehicle may perform matching between the shot image and the image of the entrance of the traversable space. If the shot image can match the image of the entrance of the traversable space, it indicates that the first vehicle has passed through the entrance of the traversable space, and the indication information of the traversable space is provided for the electronic device. Optionally, during matching, matching may be performed by extracting spatial elements from the shot image and the image of the entrance of the traversable space, or image feature matching may be performed, or the like.

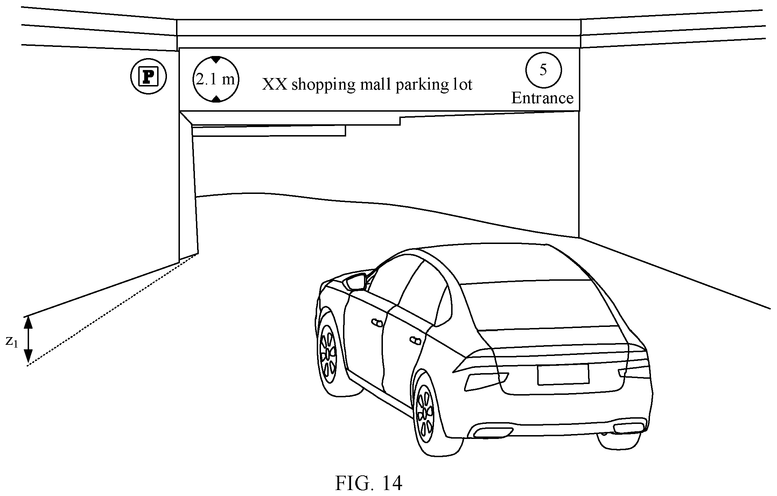

FIG. 14 is a diagram of a scenario in which a vehicle enters an underground garage according to an embodiment of this application. The underground garage may be considered as the first traversable space. Before the vehicle enters the underground garage, the shot image can continuously match an image or images of entrances of one or more traversable spaces, and indication information of a traversable space whose image of an entrance can match the second image is provided for the electronic device. With reference to FIG. 14, the image of the entrance is an image of an entrance of a "XX shopping mall parking lot". In this case, the first vehicle may provide indication information of the "XX shopping mall parking lot" for the electronic device.

In a possible implementation, the first vehicle may first determine a nearby traversable space based on location information, so that matching accuracy is higher. The location information may include one or more of longitude information, latitude information, altitude information, geo-fence information, a map tile ID, address information, administrative division information, and the like. In a possible implementation, the first vehicle obtains location information of the first vehicle, and determines, based on the location of the first vehicle, an image of an entrance of at least one to-be-matched traversable space, for example, an image of an entrance of a garage 1, an image of an entrance of a garage 2, and an image of an entrance of a garage 3. It should be understood that one traversable space may include a plurality of entrances. This is not limited in this application. During matching, the first vehicle performs matching between the shot second image and the image of the entrance of the at least one traversable space, to determine a first traversable space that matches the second image. For example, the second image may match the image of the entrance of the garage 1.

In some scenarios, the entrance of the traversable space has a specific gradient. When the vehicle enters the entrance of the traversable space, an altitude of the vehicle may change. The first vehicle may determine, based on an altitude change, whether a user enters the traversable space.

Further, the first vehicle may determine, based on the altitude change and the image of the entrance, the traversable space that the first vehicle enters. In some possible implementations, the first vehicle may further obtain a vertical height of an entrance of or vertical heights of entrances of one or more traversable spaces; detect an altitude variation of the first vehicle; and when the second image matches the image of the entrance of the first traversable space and an absolute value of a difference between the altitude variation of the first vehicle and a vertical height of the entrance of the first traversable space is less than a preset threshold, send the indication information of the first traversable space to the electronic device. The preset threshold herein may be predefined, for example, less than or equal to half of the vertical height of the entrance of the first traversable space.

In the foregoing implementation, when the absolute value of the difference between the altitude variation of the vehicle and the vertical height of the entrance of the first traversable space is less than the preset threshold, it indicates that the vehicle is very likely to enter the first traversable space. In this case, the vehicle may indicate the first traversable space to the electronic device, so that matching efficiency of the electronic device during subsequent positioning can be improved. Still refer to FIG. 14. A height difference of an entrance of the underground garage shown in FIG. 14 may be represented as z₁. When the second image shot by the vehicle matches the image of the entrance of the "XX shopping mall parking lot", and during a process of travelling toward the entrance, the altitude variation of the vehicle also matches *z*₁, for example, the variation is the same as *z*₁ or a difference is less than a preset threshold, it indicates that the first vehicle enters the "XX shopping mall parking lot". In this case, the user may subsequently get off the vehicle in the XX shopping mall parking lot and enter the shopping mall. Subsequently, the user needs to find the first vehicle in the parking lot, and has a requirement for positioning and searching for the vehicle in the parking lot. In this case, the first vehicle indicates, to the electronic device, the parking lot that the first vehicle enters, so that matching may be performed directly between the image shot by the electronic device and a map of the "XX shopping mall parking lot". This significantly reduces matching efficiency.

Correspondingly, the electronic device may receive the indication information of the first traversable space from the first vehicle. Optionally, the sending herein may be direct sending, or may be indirect sending. For example, after the vehicle 200 sends the indication information of the first traversable space to the cloud 300, the cloud 300 sends the indication information of the first traversable space to the electronic device 100.

Step S1303: The electronic device obtains a three-dimensional map of the first traversable space.

For example, three-dimensional maps of a plurality of traversable spaces are preset in the electronic device, and the three-dimensional map of the first traversable space may be obtained based on the indication information of the first traversable space.

For another example, the electronic device may download the three-dimensional map of the first traversable space from the cloud in advance based on the indication information of the first traversable space.

Step S1304: The electronic device obtains a first image.

Step S1305: The electronic device obtains a first location based on the first image and the three-dimensional map of the first traversable space.

Optionally, the electronic device may further obtain an orientation of the electronic device based on the first image and the three-dimensional map of the first traversable space.

Step S1306: The electronic device displays a first interface.

The first interface is used to indicate a location of the first location in the first traversable space.

Further, the electronic device may further display a second interface. The second interface is used to indicate a route from the first location to a destination point, and the destination point may include the location of the first vehicle or another location selected by the user.

It should be understood that, for step S1303 to step S1306, refer to related descriptions in step S301 to step S304. Details are not described herein again.

The foregoing describes in detail the method and the electronic device in embodiments of this application. The following continues to provide some apparatuses in embodiments of this application.

It should be understood that, in the apparatus provided in the following embodiment, unit division is merely logical function division. In actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All the units of the apparatus may be implemented in a form of software called by the processor, or may be implemented in a form of hardware circuit, or some of the units are implemented in a form of software called by the processor, and remaining units are implemented in a form of hardware circuit.

In embodiments of this application, the processor is a circuit with a signal processing capability. In an implementation, the processor may be a circuit with an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is an application-specific integrated circuit (application-specific integrated circuit, ASIC) or a hardware circuit, for example, an FPGA, implemented by using a programmable logic device (programmable logic device, PLD). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

The following lists several possible apparatuses.

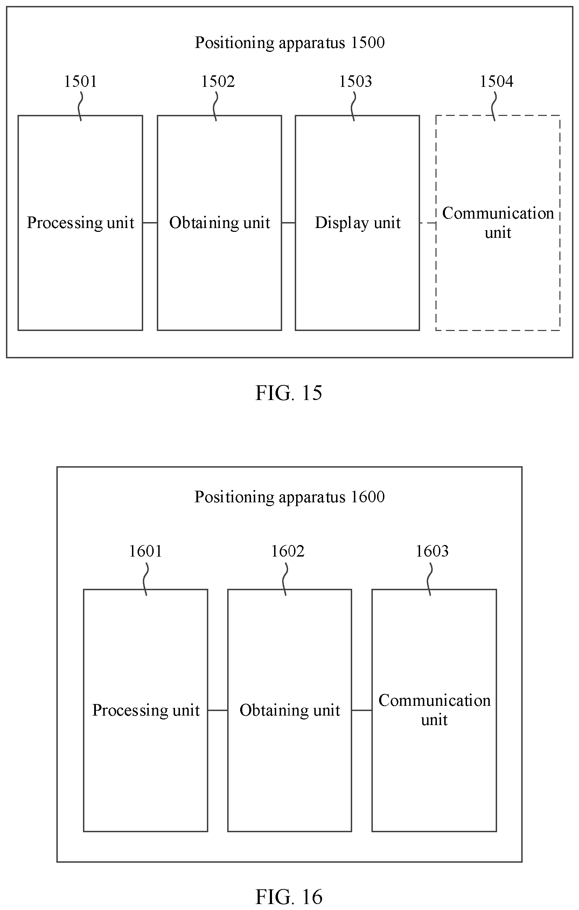

FIG. 15 is a diagram of a structure of a positioning apparatus according to an embodiment of this application. Optionally, the positioning apparatus 1500 may be an independent device, for example, an electronic device. Alternatively, the positioning apparatus 1500 may be a component in the electronic device, for example, a chip or an integrated circuit.

The positioning apparatus 1500 is configured to implement the foregoing positioning method, for example, the method implemented by the electronic device 100 in the embodiment shown in FIG. 3 or FIG. 13. In a possible implementation, the positioning apparatus 1500 includes a processing unit 1501, an obtaining unit 1502, and a display unit 1503, and optionally further includes a communication unit 1504. The processing unit 1501 is configured to implement operations such as determining, calculation, generation, and matching in the foregoing method. The processing unit 1501 may further receive a plurality of types of input data (for example, a first image or maps of a plurality of traversable spaces), or output one or more types of processed data (for example, a first location or a first image). The obtaining unit 1502 is configured to obtain an image. For example, the obtaining unit may include a shooting unit, and the image is obtained through shooting via the shooting unit. The shooting unit may be implemented via one or more of a camera (or referred to as a camera), a radar, a lidar, and the like. The display unit 1503 is configured to display an image. For example, the display unit 1503 may be a display. The communication unit 1504 is configured to implement functions such as receiving and sending, and can implement communication between the positioning apparatus 1500 and another device.

In a possible implementation, the processing unit 1501 and/or the communication unit 1504 are/is configured to obtain a three-dimensional map of a first traversable space, the obtaining unit 1502 is configured to obtain a first image, and the processing unit 1501 is further configured to obtain a first location of the electronic device in the first traversable space based on the first image and the three-dimensional map of the first traversable space.

Further, the display unit 1503 is configured to display a first interface, where the first interface includes a view of the first traversable space and a location of the first location in the view of the first traversable space.

In some implementations, the three-dimensional map of the first traversable space is obtained by fusing visual information collected by the apparatus that has travelled in the first traversable space.

In some implementations, the communication unit 1504 is further configured to receive indication information of the first traversable space from the first vehicle.

In some implementations, the communication unit 1504 is further configured to obtain the indication information of the first traversable space from a cloud.

In some implementations, the communication unit 1504 is further configured to detect a network environment of the electronic device.

In some implementations, the processing unit 1501 is further configured to: perform matching between a spatial element in the first image and a spatial element on the three-dimensional map of the first traversable space to determine a matched spatial element; and determine the first location of the electronic device in the traversable space based on a location of the matched spatial element on the three-dimensional map of the first traversable space. Further, the processing unit 1501 is further configured to extract the spatial element in the first image.

In some implementations, the three-dimensional map of the first traversable space includes a plurality of images shot at a plurality of angles of view. The processing unit is further configured to:
determine, based on the first image and the three-dimensional map of the first traversable space, an orientation of the electronic device on the three-dimensional map of the first traversable space.

In some implementations, the three-dimensional map of the first traversable space includes a plurality of images shot at a plurality of angles of view. The processing unit is further configured to:
determine, based on the first image and the three-dimensional map of the first traversable space, a target image that matches the first image; and
determine, based on a first angle of view corresponding to the target image, an orientation of the electronic device on the three-dimensional map of the first traversable space.

In some implementations, the first interface further includes the orientation of the electronic device in the traversable space.

In some implementations, the processing unit 1501 is further configured to determine a destination point, where the destination point is located in the first traversable space. The display unit 1503 is further configured to display a second interface, where the second interface includes the view of the first traversable space and a navigation route from the first location to the target point. Optionally, the destination point is a parking location of the first vehicle.

In some implementations, the positioning apparatus further includes an input interface, and the processing unit 1501 is configured to receive, through the input interface, an operation instruction entered by a user. The operation instruction indicates the destination point.

FIG. 16 is a diagram of a structure of a positioning apparatus according to an embodiment of this application. Optionally, the positioning apparatus 1600 may be an independent device, for example, a vehicle. Alternatively, the positioning apparatus 1600 may be a component in an independent device, for example, a chip or an integrated circuit.

The positioning apparatus 1600 is configured to implement the foregoing positioning method, for example, the method implemented by the vehicle 200 in the embodiment shown in FIG. 3 or FIG. 13. In a possible implementation, the positioning apparatus 1600 includes a processing unit 1601, an obtaining unit 1602, and a communication unit 1603. The processing unit 1601 is configured to implement operations such as determining, calculation, generation, and matching in the foregoing method, the processing unit 1601 may further receive a plurality of types of input data (for example, a second image, a location, or images of entrances of a plurality of traversable spaces), or may further output one or more types of processed data (for example, indication information of a traversable space). The obtaining unit 1602 is configured to obtain an image. The obtaining unit 1602 may include one or more of a camera (or referred to as a camera), a radar, a lidar, and the like. The communication unit 1603 is configured to implement functions such as receiving, sending, or obtaining, and can implement communication between the positioning apparatus 1600 and another device.

In a possible implementation, the obtaining unit 1602 is configured to obtain a second image, the processing unit 1601 is configured to determine that the second image matches an image of an entrance of a first traversable space, and the communication unit 1603 is configured to send indication information of the first traversable space to an electronic device. The electronic device is associated with a first vehicle, the indication information of the first traversable space is used by the electronic device to perform positioning on a three-dimensional map of the first traversable space, and the three-dimensional map of the first traversable space indicates a three-dimensional image of the first traversable space.

In some implementations, the processing unit 1601 and/or the communication unit 1603 are/is further configured to obtain a location of the first vehicle, and the processing unit 1601 is further configured to determine, based on the location of the first vehicle, an image of an entrance of at least one to-be-matched traversable space. The at least one traversable space includes the first traversable space.

In some implementations, the processing unit 1601 and/or the communication unit 1603 obtain/obtains a vertical height of the entrance of the first traversable space. The processing unit 1601 is further configured to detect an altitude variation of the first vehicle. The communication unit 1603 is further configured to: when the second image matches the image of the entrance of the first traversable space, and an absolute value of a difference between the altitude variation of the vehicle and the vertical height of the entrance of the first traversable space is less than a preset threshold, send the indication information of the first traversable space to the electronic device.

An embodiment of this application further provides a terminal. The movable terminal includes the foregoing positioning apparatus 1600. For example, the movable terminal may be an intelligent terminal or transportation means such as a vehicle, a robot, an uncrewed aerial vehicle, a ship, or a vessel. The vehicle is a vehicle in a broad sense, and may be a transportation vehicle (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), or the like. For another example, the robot may be a robot like an automated guided vehicle (Automated Guided Vehicle, AGV), a walkable conversational robot, or a service robot.

An embodiment of this application further provides a vehicle. The vehicle includes a memory and a processor. The memory is configured to store program instructions. When the processor executes the program instructions in the memory, the vehicle performs the positioning method in the embodiment shown in FIG. 13.

An embodiment of this application further provides a positioning system. The positioning system includes an electronic device and a vehicle. The electronic device is configured to implement the method on the side of the electronic device 100 in the embodiment shown in FIG. 13, and the vehicle is configured to implement the method on the side of the vehicle 200 in the embodiment shown in FIG. 13.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing positioning method, for example, the positioning method shown in FIG. 3 or FIG. 13.

An embodiment of this application further provides a computer-readable storage medium. The computer-readable storage medium stores instructions. When the instructions are run on at least one processor (or communication apparatus), the foregoing positioning method is implemented, for example, the positioning method shown in FIG. 3 or FIG. 13.

An embodiment of this application further provides a computer program product. The computer program product includes computer instructions, and the calculation instructions are used to implement the foregoing positioning method, for example, the positioning method shown in FIG. 3 or FIG. 13.

It should be noted that, in embodiments of this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of' means two or more. "At least one of the following items (pieces)" or a similar expression thereof refers to any combination of these items, including any combination of singular items (pieces) or plural items (pieces).

For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For another example, the first node and the second node are merely used to facilitate description of fresh parameters in different implementations, and do not indicate different execution operations, importance degrees, structures, and the like of the first node and the second node.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A positioning method, applied to an electronic device, wherein the method comprises:
obtaining a three-dimensional map of a first traversable space, wherein the first traversable space is used to accommodate movement of a movable object, and the three-dimensional map of the first traversable space indicates a three-dimensional image of the first traversable space;
obtaining a first image;
obtaining, based on the first image and the three-dimensional map of the first traversable space, a first location of the electronic device in the first traversable space; and
displaying a first interface, wherein the first interface comprises a view of the first traversable space and a location of the first location in the view of the first traversable space.

2. The method according to claim 1, wherein the three-dimensional map of the first traversable space is obtained by fusing visual information collected by a vehicle that has travelled in the first traversable space.

3. The method according to claim 1 or 2, wherein the first traversable space is located underground, or the first traversable space is located inside a building.

4. The method according to any one of claims 1 to 3, wherein the method further comprises:
receiving indication information of the first traversable space from a first vehicle, wherein the first vehicle is associated with the electronic device, and the first traversable space is a traversable space that the first vehicle enters.

5. The method according to any one of claims 1 to 3, wherein the method further comprises:
obtaining indication information of the first traversable space from a cloud, wherein the first traversable space is a traversable space in which a first vehicle is located, and the first vehicle is associated with the electronic device.

6. The method according to claim 5, wherein the method further comprises:
before obtaining the three-dimensional map of the first traversable space, detecting a network environment of the electronic device; and
when the network environment of the electronic device is normal, performing the step of "obtaining indication information of the first traversable space from a cloud".

7. The method according to any one of claims 1 to 6, wherein obtaining the first location of the electronic device in the first traversable space based on the first image and the three-dimensional self-constructed map of the first traversable space comprises:
extracting a spatial element in the first image;
performing matching between the spatial element in the first image and a spatial element on the three-dimensional map of the first traversable space, to determine a matched spatial element; and
determining the first location of the electronic device in the traversable space based on a location of the matched spatial element on the three-dimensional map of the first traversable space.

8. The method according to any one of claims 1 to 6, wherein the method further comprises:
obtaining, based on the first image and the three-dimensional map of the first traversable space, an orientation of the electronic device on the three-dimensional map of the first traversable space.

9. The method according to claim 8, wherein the three-dimensional map of the first traversable space comprises a plurality of images shot at a plurality of angles of view, and the method further comprises:
determining, based on the first image and the three-dimensional map of the first traversable space, a target image that matches the first image; and
determining, based on a first angle of view corresponding to the target image, the orientation of the electronic device on the three-dimensional map of the first traversable space.

10. The method according to claim 8, wherein the first interface further comprises the orientation of the electronic device in the traversable space.

11. The method according to any one of claims 1 to 10, wherein the method further comprises:
determining a destination point, wherein the destination point is located in the first traversable space; and
displaying a second interface, wherein the second interface comprises the view of the first traversable space and a navigation route from the first location to the target point.

12. The method according to claim 11, wherein the method further comprises:
receiving an operation instruction input by a user, wherein the operation instruction indicates the destination point.

13. The method according to claim 11 or 12, wherein the destination point is a parking location of the first vehicle.

14. A positioning method, wherein the method is applied to a first vehicle, and the method comprises:
obtaining a second image; and
when the second image matches an image of an entrance of a first traversable space, sending indication information of the first traversable space to an electronic device, wherein
the electronic device is associated with the first vehicle, the indication information of the first traversable space is used by the electronic device to perform positioning on a three-dimensional map of the first traversable space, and the three-dimensional map of the first traversable space indicates a three-dimensional image of the first traversable space.

15. The method according to claim 14, wherein the method further comprises:
obtaining a vertical height of the entrance of the first traversable space; and
detecting an altitude variation of the first vehicle;
wherein when the second image matches the image of the entrance of the first traversable space, sending the indication information of the first traversable space to the electronic device comprises:
when the second image matches the image of the entrance of the first traversable space, and an absolute value of a difference between the altitude variation of the vehicle and the vertical height of the entrance of the first traversable space is less than a preset threshold, sending the indication information of the first traversable space to the electronic device.

16. A positioning system, wherein the positioning system comprises an electronic device and a vehicle, wherein
the positioning system is configured to position the electronic device in a first traversable space;
the electronic device is configured to implement the method according to any one of claims 1 to 13; and
the vehicle is configured to implement the method according to claim 14 or 15.

17. A positioning apparatus, wherein the positioning apparatus is applied to an electronic device having an image sensor and a display module, the positioning apparatus comprises an obtaining unit, a processing unit, and a display unit, and the positioning apparatus is configured to implement the method according to any one of claims 1 to 13.

18. A positioning apparatus, wherein the positioning apparatus is applied to a vehicle having an image sensor, the positioning apparatus comprises an obtaining unit, a processing unit, and a communication unit, and the positioning apparatus is configured to implement the method according to claim 14 or 15.

19. An electronic device, wherein the electronic device comprises an image sensor, a display module, a memory, and a processor, and the memory is configured to store program instructions; and
when the processor executes the program instructions in the memory, the electronic device performs the method according to any one of claims 1 to 13.

20. A vehicle, wherein the vehicle comprises an image sensor, a communication module, a processor, and a memory, and the memory is configured to store program instructions; and
when the processor executes the program instructions in the memory, the vehicle performs the method according to claim 14 or 15.

21. A computer-readable storage medium, wherein the computer-readable storage medium stores program instructions, and the program instructions are used to implement the method according to any one of claims 1 to 13, or used to implement the method according to claim 14 or 15.
